# FASCICULE DE BREVET EUROPEEN

(11) **EP 1 307 299 B1**
(45) Date de publication et mention de la délivrance du brevet: **23.01.2008**
(21) Numéro de dépôt: 01958159.4
(22) Date de dépôt: 23.07.2001
(51) Int. Cl.: B07C 3/20, G06K 9/03

(54) **PROCEDE DE TRAITEMENT D'OBJETS POSTAUX DE GRANDE TAILLE DANS UNE INSTALLATION DE TRI**
VERFAHREN ZUR BEHANDLUNG VON GROSSEN POSTSTÜCKEN IN EINER SORTIERANLAGE
METHOD FOR PROCESSING LARGE-SIZE POSTAL OBJECTS IN A SORTING INSTALLATION

(30) Priorité: 25.07.2000 FR 0009737
(43) Date de publication de la demande: 07.05.2003
(73) Titulaire: Solystic, 94257 Gentilly Cedex (FR)
(72) Inventeur: CAILLON, Christophe, F-91220 Bretigny sur Orge (FR); LAGRANGE, Hervé, F-75015 Paris (FR)
(74) Mandataire: Prugneau, Philippe
(86) Numéro de dépôt international: PCT/FR2001/002395
(87) Numéro de publication internationale: WO 2002/007904

(56) Documents cités:
- EP-A- 0 076 332
- FR-A- 2 589 267
- US-A- 4 672 681

## Description

L'invention concerne un procédé de traitement d'objets postaux, notamment des paquets, en vue de lire automatiquement une adresse postale sur chaque objet et incluant une étape d'assistance par vidéo-codage, consistant pour chaque objet dans les étapes suivantes :
a) acquisition d'une image numérique de l'objet à un certain niveau de résolution ;
b) détection dans ladite image numérique de l'objet d'une ou plusieurs zones d'intérêt de l'image contenant chacune a priori une adresse postale ;
c) application d'un algorithme de reconnaissance automatique d'adresse sur chaque zone d'intérêt détectée dans l'image de l'objet pour extraire une adresse postale dudit objet ;
et dans lequel, en cas d'échec de l'étape de reconnaissance automatique d'adresse, chaque zone d'intérêt est affichée sur un écran d'un poste de vidéo-codage en vue d'effectuer un traitement semi-automatique par un opérateur de la lecture d'adresse postale pour ledit objet, décrit p. ex. dans le document FR-A- 2589267.

Un tel procédé est utilisé plus particulièrement dans le tri postal dans lequel, sur la base d'une lecture automatique d'adresse postale de destinataire chaque paquet est envoyé en sortie, vers un casier correspondant à sa destination. Plus concrètement, le système de traitement, de gestion, et de pilotage d'une telle installation est généralement informatisé, de telle manière que l'identification d'une adresse postale correspond à l'acquisition par ce système informatique d'une partie, ou de la totalité de cette adresse postale. Dans un tel procédé, l'adresse postale à identifier est généralement l'adresse de destinataire du paquet.

L'identification d'une adresse de destinataire peut s'effectuer par reconnaissance automatique d'adresse si cette adresse est facilement lisible, par traitement semi-automatique avec un opérateur de vidéo-codage, si cette adresse est moyennement lisible, et de façon manuelle si cette adresse est difficilement lisible. Cette identification comprend généralement l'acquisition d'une image du paquet à un certain niveau de résolution, dit haute résolution; la détection dans cette image d'une ou plusieurs zones d'intérêt comprenant a priori l'adresse de destinataire ; une tentative de reconnaissance automatique d'adresse dans chaque zone d'intérêt, pour identifier l'adresse de destinataire figurant sur le paquet. En cas d'échec de la reconnaissance automatique d'adresse, chaque zone d'intérêt est affichée sur un écran d'un poste de vidéo-codage pour qu'un opérateur de vidéo-codage effectue une assistance à l'identification de l'adresse de destinataire. Dans le cas le plus défavorable, où l'opérateur de vidéo-codage ne parvient pas à identifier l'adresse de destinataire, il peut définir lui-même une zone d'intérêt pour faire effectuer une nouvelle tentative de reconnaissance automatique d'adresse, ou faire envoyer le paquet vers un casier de sortie particulier pour qu'un opérateur de vidéo-codage identifie l'adresse de destinataire par lecture directe sur le paquet.

D'une manière générale, chaque zone d'intérêt est affichée seule, ce qui ne permet pas toujours à l'opérateur de vidéo-codage de disposer de suffisamment d'informations pour identifier l'adresse de destinataire. En particulier, la position de chaque zone d'intérêt par rapport au paquet peut constituer une information nécessaire pour, par exemple, distinguer une adresse de destinataire d'une adresse d'expéditeur.

Le but de l'invention est de remédier à ces inconvénients.
A cet effet, l'invention a pour objet un procédé de traitement d'objets postaux, notamment des paquets, en vue de lire automatiquement une adresse postale sur chaque objet et incluant une étape d'assistance par vidéo-codage, consistant pour chaque objet dans les étapes suivantes :
a) acquisition d'une image numérique de l'objet à un certain niveau de résolution ;
b) détection dans ladite image numérique de l'objet d'une ou plusieurs zones d'intérêt de l'image contenant chacune a priori une adresse postale ;
c) application d'un algorithme de reconnaissance automatique d'adresse sur chaque zone d'intérêt détectée dans l'image de l'objet pour extraire une adresse postale dudit objet ;
et dans lequel, en cas d'échec de l'étape de reconnaissance automatique d'adresse, chaque zone d'intérêt est affichée sur un écran d'un poste de vidéo-codage en vue d'effectuer un traitement semi-automatique par un opérateur de la lecture d'adresse postale pour ledit objet, caractérisé en ce que en cas d'échec de l'étape de reconnaissance automatique d'adresse, chaque zone d'intérêt est affichée à l'écran sur un fond d'écran contextuel représentatif de ladite image numérique de l'objet mais à un niveau de résolution plus faible que ledit certain niveau de résolution de l'image numérique.

Un tel procédé fait apparaître la position relative de chaque zone d'intérêt par rapport au paquet, ce qui représente une information supplémentaire importante pour qu'un opérateur de vidéo-codage puisse plus aisément identifier l'adresse de destinataire figurant sur le paquet.

Dans un mode de mise en oeuvre particulier du procédé selon l'invention, dans lequel toutes les zones d'intérêt détectées dans une image numérique d'un objet sont affichées ensembles sur ledit fond d'écran contextuel en cas d'échec de l'étape de reconnaissance automatique d'adresse, on obtient un procédé dans lequel l'opérateur de vidéo-codage peut directement distinguer une adresse postale de destinataire d'une adresse postale d'expéditeur en visualisant les positions relatives de ces adresses par rapport au paquet.

Dans un autre mode de mise en oeuvre particulier du procédé selon l'invention, dans lequel chaque zone d'intérêt est affichée à l'écran selon un niveau de résolution intermédiaire supérieur au niveau de résolution du fond d'écran contextuel et inférieur au niveau de résolution de l'image numérique de l'objet, on obtient un procédé pour lequel la taille informatique des données transmises au poste de vidéo-codage est réduite, pour que le temps de transmission de ces données soit compatible avec la cadence de traitement.

L'invention sera maintenant décrite plus en détail, et en référence aux dessins annexés qui en illustrent une forme de réalisation à titre d'exemple non limitatif.
La figure 1 est une représentation schématique d'une image affichée sur un écran de poste de vidéo-codage, avec deux zones d'intérêt.
La figure 2 est un organigramme du procédé selon l'invention.

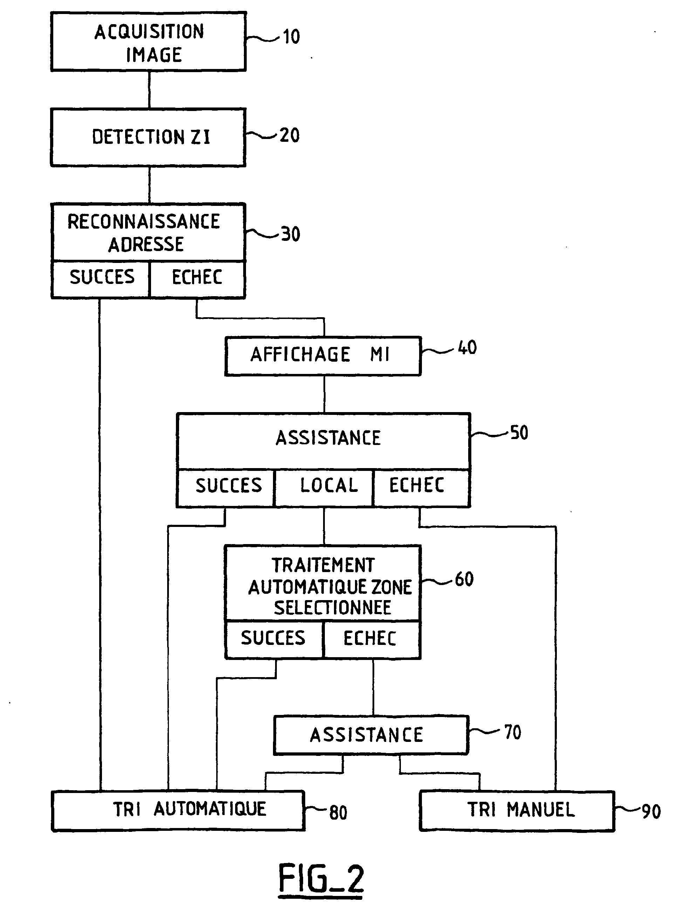

La figure 2 illustre sous la forme d'un organigramme un procédé de traitement de paquets postaux en vue de lire automatiquement une adresse postale sur chaque paquet qui est convoyé dans une installation de tri postal jusqu'à une sortie de tri correspondant à l'adresse postale, ce procédé incluant une étape d'assistance par vidéo-codage dans le cas où l'adresse postale ne peut pas être lue automatiquement.

Chaque paquet est donc convoyé pour passer face à une caméra, et dans l'étape 10 la caméra saisit une image numérique d'une ou plusieurs faces du paquet à un haut niveau de résolution. Pour un paquet de grandes dimensions, par exemple un paquet dont une des faces est un rectangle de 1 mètre par 80 centimètres, le fichier informatique dans lequel est stockée l'image haute résolution de ce paquet aura une taille d'environ 40 Mega-octets si le niveau de résolution d'acquisition est 7 pixel par millimètre avec 256 niveaux de gris.

En 20, on applique sur l'image numérique issue de l'étape 10, un algorithme de traitement conçu pour détecter dans cette image une ou plusieurs zones d'intérêt susceptibles de contenir une adresse postale, et notamment l'adresse de destinataire du paquet considéré. De telles zones d'intérêt sont détectables par exemple sur la base d'un seuillage appliqué sur les pixels de l'image numérique, du fait que ces zones d'intérêt ont généralement une couleur de fond qui définit une sorte d'étiquette dans l'image numérique et qui est différente de la couleur de fond dominante du paquet. L'installation de tri comprend un ou plusieurs postes de video-codage, et dans le cas où aucune zone d'intérêt n'a été détectée automatiquement à l'étape 20, l'image du paquet est affichée sur l'écran d'un poste de video-codage pour que la zone d'intérêt puisse être définie par l'opérateur de video-codage.

En 30, un algorithme de reconnaissance automatique d'adresse est appliqué sur chaque zone d'intérêt pour extraire automatiquement une adresse postale. L'issue de l'étape 30 est un succès dans le cas où à l'étape 20 une seule zone d'intérêt a été détectée et à l'étape 30 une adresse postale a été extraite convenablement de cette zone d'intérêt. L'issue de l'étape 30 est un échec dans le cas où aucune adresse postale n'a pu être extraite d'une zone d'intérêt détectée à l'étape 20, par exemple si les caractères sont illisibles par machine. L'issue de l'étape 30 est encore un échec si plusieurs adresses postales sont extraites de plusieurs zones d'intérêt et qu'il n'est pas possible de différencier automatiquement l'adresse postale correspondant au destinataire. Ces exemples de cas d'échec ne sont pas limitatifs dans le procédé selon l'invention.

Plus particulièrement, l'analyse des zones d'intérêt pourra comprendre pour chaque zone d'intérêt une tentative d'extraction d'une ou plusieurs chaînes de caractères par reconnaissance optique de caractères de type OCR (Optical Caracter Recognition), puis l'analyse de chaque chaîne de caractères par un système expert capable de détecter qu'une chaîne de caractères a ou n'a pas les caractéristiques d'une adresse postale.

Comme illustré sur la figure 2, en cas de succès de l'étape 30, le procédé se poursuit en 80 par le convoyage du paquet vers une sortie de tri correspondant à l'adresse de destinataire qui a été décodée à partir de l'image du paquet.

En cas d'échec à l'étape 30, chaque zone d'intérêt détectée à l'étape 20 est affichée en 40 sur l'écran d'un poste de vidéo-codage en vue d'être traitée par un opérateur de video-codage à l'étape 50. Si à l'étape 20 plusieurs zones d'intérêt ont été détectées, elles pourront avantageusement être affichées ensemble sur l'écran d'un poste de video-codage à l'étape 40.

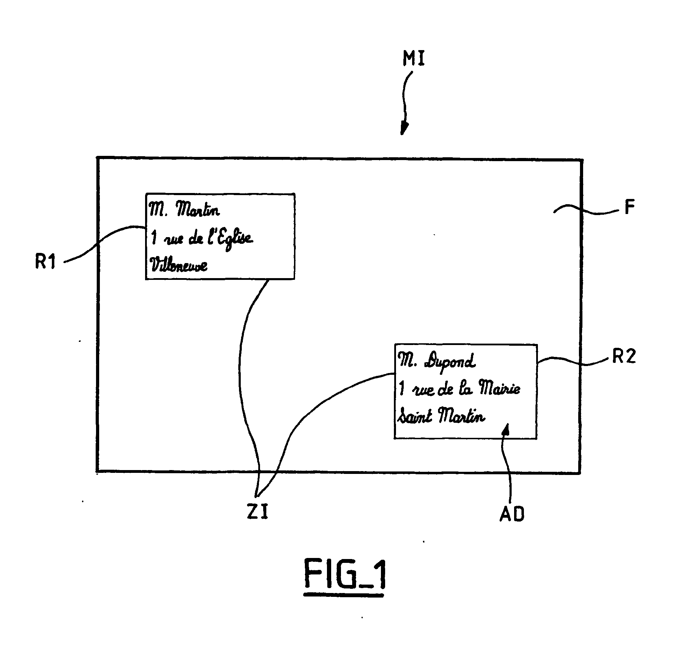

En se référant à la figure 1, on a représenté par les deux rectangles R1 et R2 deux zones d'intérêt ZI qui ont été détectées à l'étape 20 pour un paquet, et qui sont affichées ensemble à l'écran dans un fond d'écran F contextuel qui est représentatif de l'image du paquet issue de l'étape 10. Le fond d'écran F avec une ou plusieurs zones d'intérêt ZI constitue une méta-image MI, dans laquelle on peut voir l'adresse postale de destinataire AD qui figure dans le rectangle R2. Dans cette méta-image, le fond contextuel F qui est l'image de la face acquise du paquet saisie à l'étape 10, est affiché à l'écran avec un niveau de résolution plus faible que le niveau de résolution de l'image numérique obtenue à l'étape 10 pour réduire la taille du fichier informatique à transmettre au poste de vidéo-codage de façon à ce que le temps de transmission de ce fichier soit compatible avec la cadence de traitement de l'installation de tri. En variante, le poste de vidéo-codage pourra afficher le fond d'écran F avec un niveau de résolution adapté à la résolution de l'écran du poste, et permettre un agrandissement instantané de chaque zone d'intérêt.

A titre indicatif, le niveau d'affichage du fond d'écran F pourra être de 1 pixel par millimètre, à comparer aux 7 pixels par millimètres de l'image numérique de l'étape 10. Le niveau de résolution des zones d'intérêt ZI dans la méta-image MI doit être suffisant pour permettre une lecture directe de l'adresse postale sur l'écran par l'opérateur de vidéo-codage. Pour accélérer encore les temps de transmission, les zones d'intérêt ZI dans la méta-image pourront être affichées à l'écran à un niveau de résolution intermédiaire supérieur au niveau de résolution du fond d'écran, et inférieur au niveau de résolution de l'image numérique saisie en 10. Ce niveau de résolution intermédiaire pourra être par exemple de 4 pixels par millimètre.

Par conséquent, à l'étape 40, l'opérateur de vidéo-codage visualise à l'écran une ou plusieurs zones d'intérêt avec leur contexte sur la face acquise du paquet considéré, ce qui lui permet par exemple de distinguer parmi ces zones d'intérêt celle qui contient l'adresse de destinataire. Sur la base de cet affichage, l'opérateur de vidéo-codage va alors effectuer en 50 un traitement semi-automatique de la lecture d'adresse postale.

A l'étape 50, trois cas de figures sont possibles : l'étape 30 pourra avoir décodé plusieurs adresses sans avoir su différencier automatiquement l'adresse de destinataire ou encore n'arrive pas à décoder l'adresse bien que la zone sélectionnée soit bien celle de destination du paquet ; l'étape 30 n'aura identifié aucune adresse parce que l'adresse de destinataire ne figure pas dans l'image acquise ; l'étape 30 n'aura identifié aucune adresse parce que l'adresse de destinataire est sur l'image mais hors des zones d'intérêt détectées en 20. Dans le premier cas de figure, l'opérateur va sélectionner directement à l'écran la zone d'intérêt comprenant l'adresse de destinataire ou bien il saisira lui-même l'adresse du destinataire dans le cas où celle-ci figure dans les zones d'intérêt sélectionnées automatiquement mais qui n'a pu être lu automatiquement, de façon à ce que le paquet soit convoyé vers une sortie de tri correspondante dans l'installation de tri, à l'étape 80. Dans le deuxième cas de figure, l'opérateur de vidéo-codage remarque que l'adresse de destinataire ne figure pas sur l'image qui est affichée sur l'écran du poste de video-codage, et le paquet correspondant est trié manuellement dans l'étape 90. Dans le troisième cas de figure, l'opérateur de vidéo-codage remarque que l'adresse de destinataire est dans l'image mais est située hors des zones d'intérêt détectées automatiquement en 20, et il va invalider les zones d'intérêt détectées automatiquement pour définir lui-même la zone d'intérêt comprenant l'adresse de destinataire et soumettre celle-ci à l'algorithme de reconnaissance automatique d'adresse en 60. Ainsi, l'étape 60 donnera lieu à l'envoi du paquet vers une sortie de tri correspondante en 80 en cas de succès de la reconnaissance automatique d'adresse, et à l'envoi vers un autre traitement en 70 en cas d'échec de la reconnaissance automatique d'adresse. Dans l'étape 70 l'opérateur de vidéo-codage va effectuer une saisie manuelle sur clavier de l'adresse de destinataire qui figure dans la zone d'intérêt définie en 50 et qui n'a pu être lue automatiquement en 60, pour envoyer le paquet vers une sortie de tri automatique en 80. Si l'adresse est illisible, l'opérateur envoie en rejet le paquet pour qu'il soit trié manuellement à l'étape 90.

Comme on le voit, le procédé selon l'invention s'applique particulièrement aux paquets postaux de grandes dimensions, dans lesquels les échecs de lecture automatique d'adresse postale sont fréquents, du fait que ces paquets sont souvent chargés de vignettes, d'étiquettes, et autres codes barres.

## Revendications

1. Un procédé de traitement d'objets postaux, notamment des paquets, en vue de lire automatiquement une adresse postale (AD) sur chaque objet et incluant une étape d'assistance par vidéo-codage, comprenant pour chaque objet les étapes consistant à:
a) effectuer une acquisition (10) d'une image numérique de l'objet à un premier niveau de résolution ;
b) détecter (20) dans ladite image numérique de l'objet d'une ou plusieurs zones d'intérêt (ZI) de l'image contenant chacune a priori une adresse postale ;
c) appliquer un algorithme de reconnaissance automatique d'adresse sur chaque zone d'intérêt détectée dans l'image de l'objet pour extraire une adresse postale (AD) dudit objet ; et dans lequel, en cas d'échec de l'étape de reconnaissance automatique d'adresse (30), chaque zone d'intérêt (ZI) est affichée (40) sur un écran d'un poste de vidéo-codage à un second niveau de résolution et sur un fond d'écran contextuel (F) représentatif de ladite image numérique de l'objet eh vue d'effectuer un traitement semi-automatique (50) par un opérateur de la lecture d'adresse postale (AD) pour ledit objet, **caractérisé en ce que** en cas d'échec de l'étape de reconnaissance automatique d'adresse (30), le procédé comprend en outre l'étape consistant à afficher le fond d'écran contextuel (F) à un troisième niveau de résolution inférieur audit second niveau de résolution de l'image numérique.

2. Le procédé selon la revendication 1, dans lequel toutes les zones d'intérêt détectées dans une image numérique d'un objet sont affichées ensemble sur ledit fond d'écran contextuel en cas d'échec de l'étape de reconnaissance automatique d'adresse.

3. Le procédé selon l'une des revendications 1 ou 2, dans lequel ledit second niveau de résolution est inférieur audit premier niveau de résolution.

## Claims

1. A method of processing postal objects, in particular packets, in order to read a postal address (AD) automatically on each object, the method including a step of assistance by video-coding, said method comprising the following steps for each object:
a) acquiring (10) a digital image of the object at a first level of resolution;
b) detecting (20) in said digital image of the object one or more zones of interest (ZI) of the image each apparently containing a postal address;
c) applying an automatic address recognition algorithm to each detected zone of interest in order to extract a postal address (AD) of said object; and
if the automatic address recognition step (30) fails, displaying (40) each zone of interest (ZI) at a second level of resolution on a screen of a video-coding station on a screen context background (F) representative of said digital image of the object in order to enable an operator to perform semi-automatic processing (50) to read the postal address (AD) of said object, said method being **characterised in that**, if the automatic address recognition step (30) fails, it further comprises the step consisting in displaying the screen context background on the screen at a third level of resolution that is lower than said second level of resolution.

2. The method of claim 1, in which all of the zones of interest detected in a digital image of an object are displayed together on said screen context background if the automatic address recognition step fails.

3. A method according to anyone of claim 1 or 2, in which said second level of resolution is lower than said first level of resolution.

## Patentansprüche

1. Verfahren zur Behandlung von Postgegenständen, insbesondere von Paketen, zum automatischen Lesen einer Postadresse (AD) auf jedem Gegenstand und beinhaltend einen Schritt mit Video-Kodierungsunterstützung, welches für jeden Gegenstand die folgenden Einzelschritte umfasst:
a) Erfassung (10) eines digitalen Bildes des Gegenstandes in einer ersten Auflösungsstufe;
b) Detektierung (20) eines oder mehrerer Interessensausschnitte (ZI) in dem digitalen Bild des Gegenstandes, wobei jeder Ausschnitt auf den ersten Blick eine Postadresse enthält;
c) Anwendung eines Algorithmus zur automatischen Adressenerkennung auf jeden im Bild des Gegenstandes detektierten Interessensausschnitt (ZI), um eine Postadresse (AD) aus dem Gegenstand zu extrahieren;
und in welchem, im Fall eines Scheiterns des Schrittes der automatischen Adressenerkennung (30), jeder Interessensausschnitt (ZI) auf einem Bildschirm einer Video-Kodierungsstelle in einer zweiten Auflösungsstufe und auf einem zusammenhängenden repräsentativen Bildschirmhintergrund (F) des besagten Digitalbildes des Gegenstandes angezeigt wird (40), um eine halbautomatische Behandlung (50) zum Lesen der Postadresse (AD) des besagten Gegenstandes durch einen Bediener durchzuführen, **dadurch gekennzeichnet, dass** im Falle eines Scheiterns der Stufe der automatischen Adressenerkennüng (30) das Verfahren außerdem eine weitere Stufe umfasst, die darin besteht, den zusammenhängenden Bildschirmhintergrund (F) in einer dritten, niedrigeren Auflösungsstufe, im Vergleich zur zweiten Auflösungsstufe des Digitalbildes, anzuzeigen.

2. Verfahren gemäß Anspruch 1, in dem alle Interessensausschnitte, die in einem Digitalbild eines Gegenstandes detektiert wurden, im Fall eines Scheiterns der Stufe der automatischen Adressenerkennung zusammen auf dem zusammenhängenden Bildschirmhintergrund angezeigt werden.

3. Verfahren gemäß einem der Ansprüche 1 oder 2, in welchem die zweite Auflösungsstufe niedriger als die erste Auflösungsstufe ist.
